# EUROPEAN PATENT APPLICATION

(11) **EP 1 416 754 A1**
(43) Date of publication of application: **06.05.2004**
(21) Application number: 02753214.2
(22) Date of filing: 31.07.2002
(51) Int. Cl.: H04Q 7/38

(54) **MOBILE TERMINAL, CONTROL STATION, COMMUNICATION METHOD, COMMUNICATION PROGRAM, AND CONTROL PROGRAM**

(30) Priority: 07.08.2001 JP 2001239348
(71) Applicant: NTT DoCoMo, Inc., Tokyo 100-6150 (JP)
(72) Inventor: OHTA, K., Intel. Prop. Dpt., NTT DoCoMo, Inc., Tokyo 100-6150 (JP); ISODA, Y., Intel. Prop. Dpt., NTT DoCoMo, Inc., Tokyo 100-6150 (JP); NAKAGAWA, T., Intel. Prop. Dpt., NTT DoCoMo, Inc., Tokyo 100-6150 (JP); SUGIMURA, T., Intel. Prop. Dpt., NTT DoCoMo, Inc., Tokyo 100-6150 (JP)
(74) Representative: GROSSE BOCKHORNI SCHUMACHER
(86) International application number: PCT/JP2002/007814
(87) International publication number: WO 2003/015445

(57) **Abstract**

The following operation is carried out in order to enable a signal to a portable terminal of a destination to be relayed by another portable terminal so as to successfully reach the portable terminal of the destination. A base station 21 makes and transmits a relayable signal to'a portable terminal 12, based on a received signal. Suppose another portable terminal 11 received this relayable signal. The portable terminal 11 further transmits the relayable signal, because the relayable signal is not one addressed to itself. The portable terminal 12 outside service areas 31-33 receives the relayable signal transmitted by the portable terminal 11. A service area for transmission of the relayable signal can be determined based on information about the portable terminal or other information. It is possible to change the number of relays of the relayable signal and a storage time thereof in the portable terminal.

## Description

### Technical Field

The present invention relates to a portable terminal, a control station, a communication method, a control method, a communication program, and a control program.

### Background Art

In the conventional cellular phone networks, a cellular phone outside a call area was shut off from any communication.

However, there was a problem that such a cellular phone was not allowed to receive an incoming call, for example, even an emergency notice, and to send or receive any message.

The conventional technology as integration of the technology of the mobile communication networks with the technology of communication between portable terminals was proposed in research reports, e.g., George Neonakis Aggelou and Rahim Tafazolli, "On the Relaying Capability of Next-Generation GSM Cellular Networks," IEEE Personal Communications, vol. 8, no. 1, pp.40-47, February 2001, but no proposal has been made yet for the technology of properly selecting a base station that should relay a signal and for the technology of performing relay control according to levels of importance or urgency of transmitted messages. There were strong desires for such technologies.

An object of the present invention is, therefore, to enable a signal to a portable terminal of a destination to be relayed by another portable terminal so as to reach the portable terminal of the destination.

### Disclosure of the Invention

In order to achieve the above object, a portable terminal according to the present invention comprises: receiving means for receiving a signal to another portable terminal; and transmitting means for transmitting the signal to the other portable terminal.

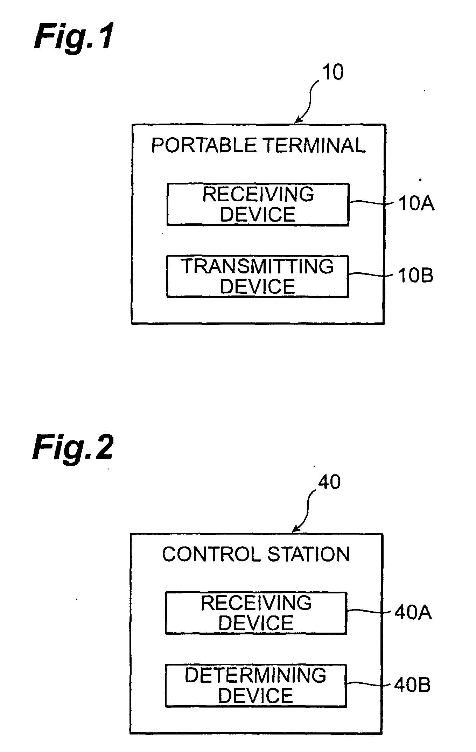

Another portable terminal according to the present invention is a portable terminal comprising: receiving means for receiving information about the number of relays of a signal to another portable terminal; and transmitting means for determining whether the signal to the other portable terminal is to be transmitted, based on the information about the number of relays of the signal to the other portable terminal, and controlling transmission of the signal, based on a result of the determination. Namely, as shown in Fig. 1, a portable terminal 10 according to the present invention comprises a receiving device 10A for receiving information about the number of relays of a signal to another portable terminal, and a transmitting device 10B for determining whether the signal to the other portable terminal is to be transmitted, based on the information about the number of relays of the signal to the other portable terminal, and controlling transmission of the signal, based on a result of the determination.

In the portable terminal according to the present invention, more preferably, the receiving means receives information about a level of urgency or importance of the signal to the other portable terminal, and the transmitting means determines whether the signal to the other portable terminal is to be transmitted, based on the information about the number of relays of the signal to the other portable terminal and on the information about the level of urgency or importance.

More preferably, the portable terminal according to the present invention further comprises means for storing the signal to the other portable terminal, and is configured in a configuration wherein the receiving means receives information about a storage time of the signal to the other portable terminal, wherein the storing means determines a time to store the signal to the other portable terminal, based on the information about the storage time of the signal to the other portable terminal, and wherein the transmitting means repeatedly transmits the signal to the other portable terminal stored.

More preferably, the portable terminal according to the present invention further comprises means for storing the signal to the other portable terminal, and is configured in a configuration wherein the receiving means receives information about a level of urgency or importance of the signal to the other portable terminal, wherein the storing means determines a time to store the signal to the other portable terminal, based on the information about the level of urgency or importance of the signal to the other portable terminal, and wherein the transmitting means repeatedly transmits the signal to the other portable terminal stored.

In the portable terminal according to the present invention, more preferably, the receiving means and/or the transmitting means performs short-range wireless communication.

In the portable terminal according to the present invention, more preferably, the short-range wireless communication is communication based on Bluetooth.

More preferably, the portable terminal according to the present invention further comprises: reply signal receiving means for receiving a reply signal transmitted by the other portable terminal; and reply signal transmitting means for transmitting the reply signal transmitted by the other portable terminal.

A control station according to the present invention is a control station used in a system having at least one service area and configured to provide a radio communication service to a portable terminal, the control station comprising: receiving means for receiving a transmission request to a portable terminal; and determining means for determining at least one service area for transmission of a relayable signal that can be transmitted to a portable terminal as a target for the transmission request via a portable terminal other than the target portable terminal.

Another control station according to the present invention is a control station used in a system having at least one service area and configured to provide a radio communication service to a portable terminal, the control station comprising: receiving means for receiving a transmission request to a portable terminal; and determining means for determining at least one service area for transmission of a relayable signal that can be transmitted to a portable terminal as a target for the transmission request via a portable terminal other than the portable terminal, based on information about the portable terminal as a target for the transmission request. Namely, as shown in Fig. 2, a control station 40 according to the present invention comprises a receiving device 40A for receiving a transmission request to a portable terminal, and a determining device 40B for determining at least one service area for transmission of a relayable signal that can be transmitted to a portable terminal as a target for the transmission request via a portable terminal other than the target portable terminal, based on information about the portable terminal as a target for the transmission request.

In the control station according to the present invention, more preferably, the service area determined by the determining means includes at least one of a service area preliminarily registered for the portable terminal as a target for the transmission request, a service area where the portable terminal as a target for the transmission request performed location registration last, and a service area where the portable terminal as a target for the transmission request frequently performed location registration.

In the control station according to the present invention, more preferably, the determining means determines the service area for transmission of the relayable signal, based on information independent of the portable terminal as a target for the transmission request.

In the control station according to the present invention, more preferably, the service area determined by the determining means includes a service area where the portable terminal frequently fails to perform communication in a home area thereof.

In the control station according to the present invention, more preferably, the receiving means receives information about the transmission request, and the determining means adjusts the number of service areas for' transmission of the relayable signal, based on the information about the transmission request, and determines the service area or areas.

In the control station according to the present invention, more preferably, the information about the transmission request is information about a level of urgency or importance of the transmission request.

A communication method according to the present invention is a communication method in a portable terminal, comprising: a receiving step of receiving a signal to another portable terminal; and a transmitting step of transmitting the signal to the other portable terminal.

Another communication method according to the present invention is a communication method in a portable terminal, comprising: a receiving step of receiving information about the number of relays of a signal to another portable terminal; a determining step of determining whether the signal to the other portable terminal is to be transmitted, based on the information about the number of relays of the signal to the other portable terminal; and a transmission control step of controlling transmission of the signal, based on a result of the determination.

A control method according to the present invention is a control method used in a system having at least one service area and configured to provide a radio communication service to a portable terminal, the control method comprising: a receiving step of receiving a transmission request to a portable terminal; and a determining step of determining at least one service area for transmission of a relayable signal that can be transmitted to a portable terminal as a target for the transmission request via a portable terminal other than the target portable terminal.

Another control method according to the present invention is a control method used in a system having at least one service area and configured to provide a radio communication service to a portable terminal, the control method comprising: a receiving step of receiving a transmission request to a portable terminal; and a determining step of determining at least one service area for transmission of a relayable signal that can be transmitted to a portable terminal as a target for the transmission request via a portable terminal other than the portable terminal, based on information about the portable terminal as a target for the transmission request.

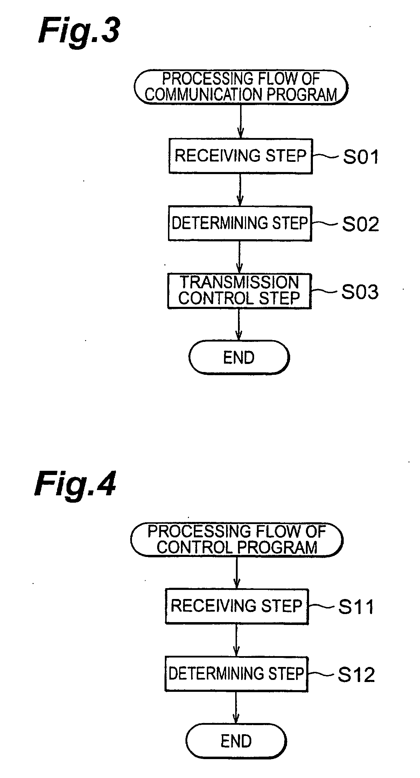

A communication program according to the present invention is a communication program for letting a computer, which is mounted on a portable terminal, execute the following steps, as shown in Fig. 3: a receiving step S01 of receiving information about the number of relays of a signal to another portable terminal; a determining step S02 of determining whether the signal to the other portable terminal is to be transmitted, based on the information about the number of relays of the signal to the other portable terminal; and a transmission control step S03 of controlling transmission of the signal, based on a result of the determination.

A control program according to the present invention is a control program for letting a computer, which is mounted on a control station used in a system having at least one service area and configured to provide a radio communication service to a portable terminal, execute the following steps, as shown in Fig. 4: a receiving step S11 of receiving a transmission request to a portable terminal; and a determining step S12 of determining at least one service area for transmission of a relayable signal that can be transmitted to a portable terminal as a target for the transmission request via a portable terminal other than the target portable terminal, based on information about the portable terminal as a target for the transmission request.

The above configurations permit a signal to a portable terminal of a destination to be relayed by another portable terminal so as to reach the portable terminal of the destination.

The above object and other features and advantages of the present invention will become apparent to those skilled in the art in view of the detailed description below with reference to the accompanying drawings.

### Brief Description of the Drawings

Fig. 1 is a block diagram of a portable terminal according to the present invention.
Fig. 2 is a block diagram of a control station according to the present invention.
Fig. 3 is a flowchart showing a processing flow of a communication program.
Fig. 4 is a flowchart showing a processing flow of a control program.
Fig. 5 is an illustration showing a configuration example of a radio communication service providing system.
Fig. 6 is an illustration showing an example of functional blocks of a portable terminal.
Fig. 7 is a diagram for explaining processing carried out when a control station 40 receives a transmission request to a portable terminal 12.
Fig. 8 is a flowchart of control processing based on the number of relays, executed in a relaying portable terminal 11.
Fig. 9 is a flowchart of control processing based on a storage time, executed in a relaying portable terminal 11.
Fig. 10 is a flowchart of interrupt processing into the processing of Fig. 9.

### Best Mode for Carrying out the Invention

Embodiments of the present invention will be described below in detail with reference to the drawings.

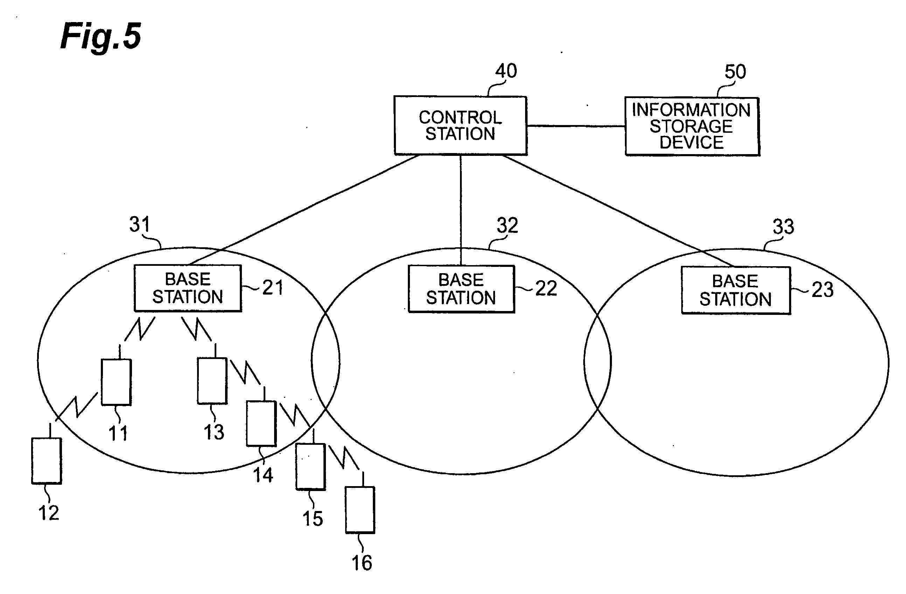

Fig. 5 is an illustration showing a configuration example of a radio communication service providing system. Base stations 21-23 have their respective service areas 31-33. Portable terminals 11-16 can receive the radio communication service in the service areas 31-33. Control station 40 exercises control over the base stations 21-23. Information storage device 50 stores information about each portable terminal (e.g., the present location). The portable terminals 11-16 can be of forms of cellular phones, PHS, and so on. Although not shown in Fig. 5, the radio communication service providing system can include switching centers and others. The control station 40 is provided with the receiving device 40A and the determining device 40B according to the present invention, as shown in Fig. 2. The control station 40 can also be arranged to be connected to other networks. The control station 40 may be integrated with the information storage device 50 or may be integrated with a switching center.

When a portable terminal 11-16 comes to lie in a new service area because of power-on, movement, or the like, it performs location registration. Information about the location of the portable terminal 11-16 is stored in the information storage device 50.

Each portable terminal 11-16 is able to relay a signal. Namely, a portable terminal is able to receive a signal to another portable terminal and transmit it. For example, supposing the base station 21 tries to send a signal to the portable terminal 12 located outside its service area, it will fail to transmit the signal directly, but the base station 21 can send the signal via the portable terminal 11 to the portable terminal 12. In another case where the base station 21 tries to send a signal to the portable terminal 16, for example, the base station 21 can send the signal via the portable terminal 13, portable terminal 14, and portable terminal 15 to the portable terminal 16.

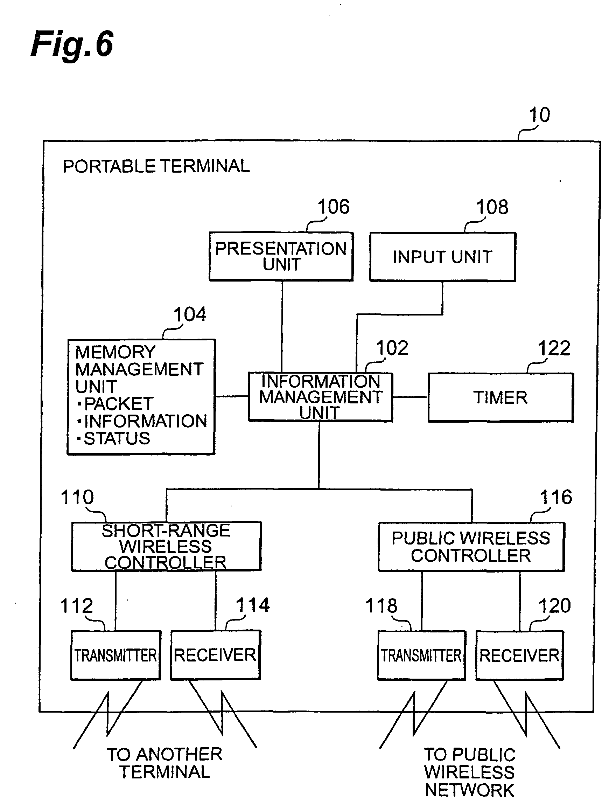

Each portable terminal is provided with the receiving device 10A and the transmitting device 10B according to the present invention, as shown in Fig. 1, and the configuration thereof is presented in more detail in Fig. 6. Fig. 6 is a diagram showing an example of functional blocks of the portable terminal, which conceptually shows only portions associated with the present invention out of the functions of the portable terminal. The portable terminal 10 is provided with an information management unit 102 having a function of controlling the entire terminal; a memory management unit 104 having a function of managing storage of various information; a presentation unit 106, for example, comprised of a display, a speaker, etc.; an input unit 108 including manual operation buttons and others; a short-range wireless controller 110 having a function of controlling short-range wireless (communication); a transmitter 112 of short-range wireless; a receiver 114 of short-range wireless; a public wireless controller 116 having a function of controlling public wireless (communication) with public wireless networks (e.g., the base stations 21-23); a transmitter 118 of public wireless; a receiver 120 of public wireless; and a timer 122 for giving notice of a predetermined time (e.g., expiration of a storage time described later). The present embodiment adopts packet transmission for both the short-range wireless (communication) and the public wireless (communication). The present embodiment employs communication based on Bluetooth as the short-range wireless (communication). The public wireless communication is normally used for communication between the base stations and the portable terminals, but the short-range wireless communication may also be used, for example, if the distance is short enough between the base stations and the portable terminals.

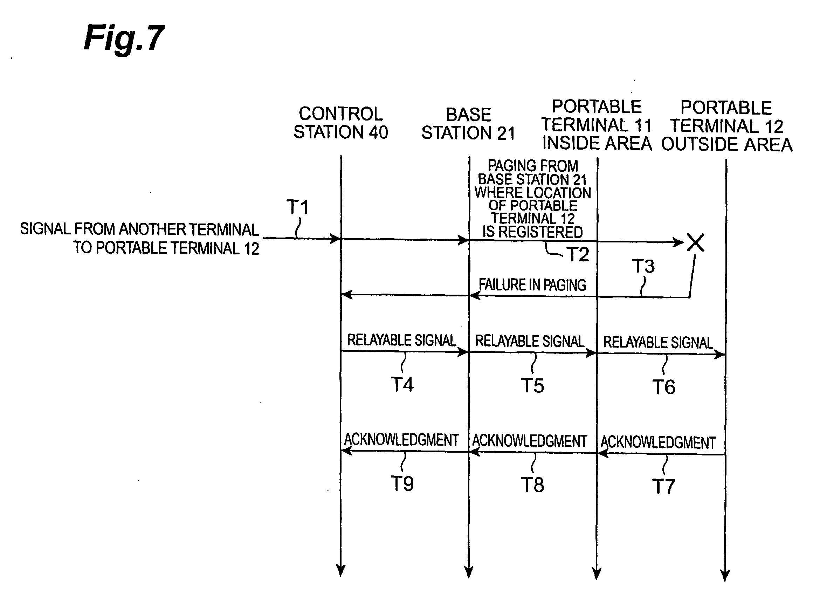

The following will describe the processing carried out in the case where the control station 40 receives a transmission request (e.g., an incoming call request or a message transmission request) to the portable terminal 12, referring to Figs. 5 and 7. The transmission request to the portable terminal 12 can possibly be one originated and transmitted from another portable terminal or one originated from a fixed terminal and transmitted through a network.

When the control station 40 receives a transmission request to the portable terminal 12 from another terminal (T1 in Fig. 7), it identifies the base station 21 corresponding to the registered location of the portable terminal 12 and lets the base station 21 page the portable terminal 12 (T2). Since at this time the portable terminal 12 is located outside the service area 31 of the base station 21, the paging ends in failure (T3).

As a result of this failure, the control station 40 determines the service area 31 as at least one service area for transmission of a relayable signal that can be transmitted to the portable terminal 12 as a target for the transmission request via a portable terminal other than the portable terminal 12 (which will be referred to herein as "relayable signal transmission target service area"). A method of the determination herein can be selected from a variety of conceivable methods, and the details thereof will be described later.

After determining the relayable signal transmission target service area, the control station 40 transmits the relayable signal and the signal addressed to the portable terminal 12, to the base station 21 in charge of the service area (T4), and the base station 21 transmits the relayable signal and the signal addressed to the portable terminal 12, to the portable terminal 11 inside the service area (T5). Then the portable terminal 11 transmits the relayable signal and the signal addressed to the portable terminal 12, to the portable terminal 12 (T6). The signal addressed to the portable terminal 12 reaches the portable terminal 12 in this way.

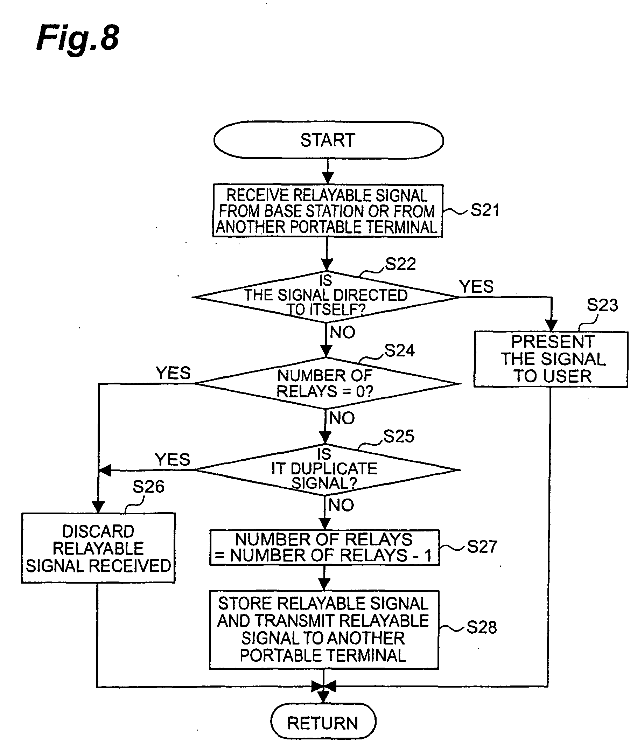

When the signal addressed to the portable terminal 12 is a message, the message is presented to the user in the portable terminal 12 and the processing is terminated. When the signal addressed to the portable terminal 12 is a terminating signal such as a call or the like, the portable terminal 12 transmits an acknowledgment signal via the portable terminal 11 and the base station 21 to the control station 40 (T7, T8, and T9). The processing of the portable terminal 11 in the above relaying operation will be described later with reference to Figs. 8 to 10.

The above transmission of the relayable signal is generally carried out after a failure in the normal transmission processing (in the case of the present embodiment, the process of directly transmitting the signal from the base station to the portable terminal in the service area where the portable terminal as a target for the transmission request performed location registration last) as in Fig. 7, but it may be carried out simultaneously with the normal transmission processing.

A method of determining the relayable signal transmission target service area can be selected from a variety of conceivable methods. The determining methods will be described below.

For example, the target service area can be determined based on information about the portable terminal (portable terminal 12) as a target for the transmission request. More specifically, it can be contemplated, for example, that the target service area is set to a service area preliminarily registered for the portable terminal 12 (e.g., a user's living area that a user of the portable terminal 12 previously registered). It can also be contemplated that the target service area is set to a service area where the portable terminal 12 performed location registration last. It can also be contemplated that the target service area is set to a service area where the portable terminal 12 frequently performed location registration. The information about the portable terminal 12 (e.g., the information of the service area preliminarily registered for the portable terminal 12) is stored in the information storage device 50 whereby the control station 40 can access thereto as occasion arises. It is also possible to store these information in the control station 40 itself.

It is also contemplated, for example, that the relayable signal transmission target service area is determined based on information independent of the portable terminal (portable terminal 12) as a target for the transmission request. The target service area is determined, for example, based on information about service areas where the portable terminal fails in communication in its home area with high frequency. An example of such service areas is a service area including an underground shopping area or the like where a signal from the base station is hard to reach.

The method of determining the relayable signal transmission target service area can be selected, for example, from the methods as described above, and it may also be contemplated that a plurality of service areas are selected by combination of these determining methods or that a service area adjacent to the selected service area is further selected as a target.

The control station 40 can also be configured to receive information about the transmission request and determine the relayable signal transmission target service area, based on the information. For example, the number of relayable signal transmission target service areas can be adjusted based on the information about the transmission request. The information about the transmission request can possibly be, for example, the level of urgency or importance of the transmission request. When the level of urgency or importance is high, the number of relayable signal transmission target service areas is set at a large number whereby the signal can be transmitted to the portable terminal 12 with a high possibility. The information about the transmission request may be included in the transmission request (signal) or may be separately transmitted.

The below will describe the flow of processing carried out when the service area 31 is determined as a relayable signal transmission target service area. The base station 21 generates and transmits (or broadcasts) a relayable signal addressed to the portable terminal 12, based on a received signal. Let us suppose that the portable terminal 11 received this relayable signal. Since the relayable signal is not a signal addressed to itself, the portable terminal 11 further transmits (broadcasts) the relayable signal. In the present embodiment, the portable terminals are configured to transmit the relayable signal by short-range wireless communication (more specifically, communication based on Bluetooth). When the portable terminal 12 receives the relayable signal transmitted by the portable terminal 11, the portable terminal 12 does not transmit the relayable signal anymore, because the relayable signal is a signal addressed to itself. The portable terminal 12 can generate a reply signal to the relayable signal and transmit it. The reply signal thus transmitted can reach the base station 21 via the portable terminal 11. However, the reply signal possibly fails to reach the base station 21 in certain cases, for example, where the distance between the portable terminal 12 and the portable terminal 11 changes over the short-range wireless communicable range.

The base station 21 can further transmit information about the number of relays of the relayable signal. The information about the number of relays may be included in the relayable signal or may be transmitted separately therefrom. A portable terminal receiving the information about the number of relays, determines whether the relayable signal is to be transmitted, based on the information about the number of relays. For example, the system can be configured as follows: the base station 21 transmits n as the information about the number of relays; a portable terminal receiving the relayable signal and the information transmits n-1 as the information about the number of relays on the occasion of transmitting the relayable signal; a portable terminal receiving the relayable signal and the information transmits n-2 as the information about the number of relays on the occasion of transmitting the relayable signal; this processing is repeated until the information about the number of relays becomes 0; the transmission of the relayable signal is no longer carried out with the information of 0.

This configuration permits the reachability of the signal (to the portable terminal 12) to be adjusted, for example, by changing the number of relays according to levels of urgency or importance.

The following will describe the control processing based on the number of relays, which is executed in the relaying portable terminal 11, in detail with reference to Fig. 8. Let us suppose herein that the signal addressed to the portable terminal 12 is a message.

When the portable terminal 11 receives a relayable signal from the base station 21 or from another portable terminal (S21 in Fig. 8), it checks whether the relayable signal is one directed to itself (S22). When the relayable signal is one directed to its own terminal, the portable terminal 11 displays the message represented by the signal addressed to the portable terminal, on the presentation unit 106 of Fig. 6 to present it to the user (S23), and terminates the processing of Fig. 8.

When the relayable signal is not one directed to itself in S22, the portable terminal 11 checks whether the number of relays recorded in the relayable signal is 0 (S24). When the number of relays is 0, it can be determined that a further relay is not desired, and the portable terminal 11 thus discards the relayable signal received (S26) and terminates the processing of Fig. 8.

When the number of relays is not 0 in S24, the portable terminal 11 checks whether the relayable signal is a duplicate signal of a relayable signal already received and stored (S25). When the relayable signal is a duplicate signal, it can be determined that a relay of the relayable signal is a useless process, and thus the portable terminal 11 discards the relayable signal received (S26) and terminates the processing of Fig. 8.

When the relayable signal is not a duplicate signal in S25, the number of relays is reduced by one (S27); the relayable signal including the information about the number of relays after the reduction is stored in the memory management unit 104 of Fig. 6; and the portable terminal 11 transmits the relayable signal to another portable terminal (the portable terminal 12 herein) (S28) and terminates the processing of Fig. 8.

The above processing of Fig. 8 enables the appropriate relay control of the signal to be executed based on the number of relays of the relayable signal.

The base station 21 can also transmit information about the level of urgency or importance of the relayable signal, instead of the information about the number of relays of the relayable signal. For example, a portable terminal receiving the relayable signal and the information about the level of urgency or importance transmitted from the base station 21, transmits to the next portable terminal the information about the number of relays of the relayable signal, in addition to the relayable signal and the information about the level of urgency or importance. The information about the number of relays of the relayable signal can be, for example, the number of relays itself, which is increased by one per relay. Each portable terminal to perform a relay determines whether a further relay should be carried out, based on the information about the number of relays of the relayable signal and the information about the level of urgency or importance. Namely, with a high level of urgency or importance, a further relay is performed even if the number of relays is large; with a low level of urgency or importance, a further relay is not performed even if the number of relays is small.

The base station 21 can further transmit information about a storage time of the relayable signal. The information about the storage time may be included in the relayable signal or may be transmitted separately. A portable terminal receiving the information about the storage time, determines a time to store the relayable signal, based on the information about the storage time, and stores the relayable signal. Then the portable terminal repeatedly transmits the relayable signal thus stored. On the occasion of the transmission, the portable terminal also transmits the information about the storage time. A portable terminal receiving the relayable signal over the storage time, discards it and does not transmit it further.

This permits the reachability of the signal to be adjusted, for example, by changing the storage time according to levels of urgency or importance. When the storage time is set long, the reachability becomes higher, because the portable terminal repeatedly performs the transmission of the relayable signal while moving around.

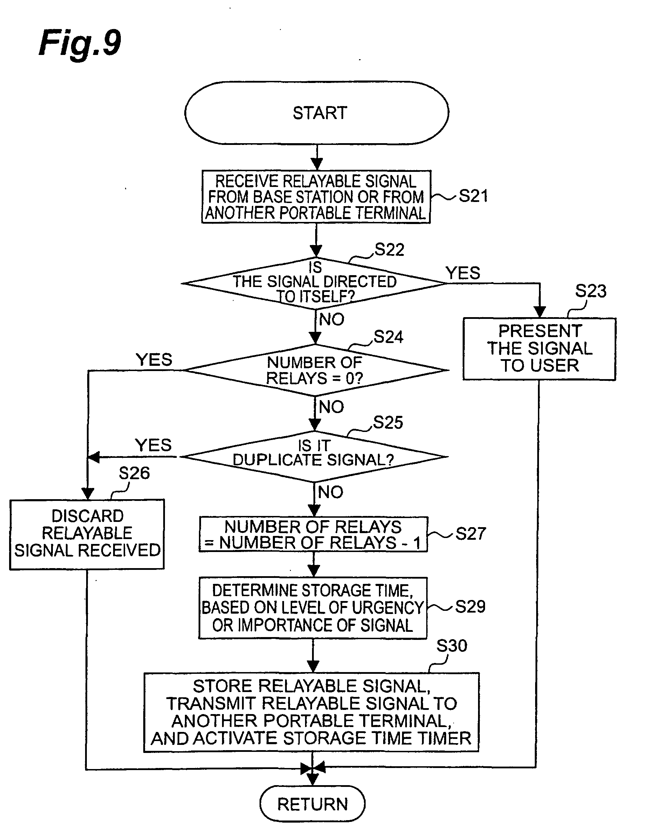

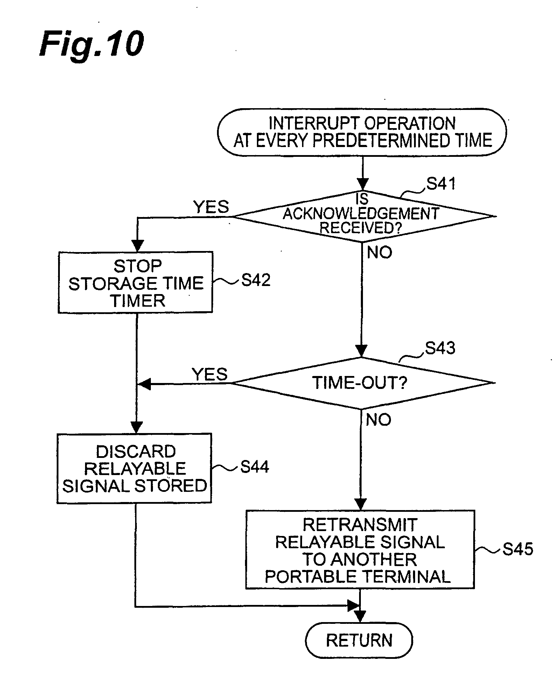

The following will describe the control processing based on the storage time, which is executed in the relaying portable terminal 11, in detail with reference to Figs. 9 and 10. Let us suppose herein that the signal addressed to the portable terminal 12 is a message.

When the portable terminal 11 receives a relayable signal from the base station 21 or from another portable terminal (S21 in Fig. 9), it checks whether the relayable signal is one addressed to itself (S22). If the relayable signal is one addressed to itself, the message represented by the signal addressed to the portable terminal is displayed on the presentation unit 106 of Fig. 6 to present it to the user (S23), and the processing of Fig. 9 is terminated.

When the relayable signal is not one to its own terminal in S22, the portable terminal checks whether the number of relays recorded in the relayable signal is 0 (S24). When the number of relays is 0, it can be determined that a further relay is not desired, and the portable terminal discards the relayable signal received (S26) and terminates the processing of Fig. 9.

When the number of relays is not 0 in S24, it is checked whether the relayable signal is a duplicate signal of a relayable signal already received and stored (S25). When the relayable signal is a duplicate signal, it can be determined that a further relay of the relayable signal is a useless process, and the portable terminal discards the relayable signal received (S26) and terminates the processing of Fig. 9.

When the relayable signal is not a duplicate signal in S25, the number of relays is reduced by one (S27), and thereafter the portable terminal determines a storage time on the basis of the level of urgency or importance of the signal recorded in the relayable signal (S29).

In S30 thereafter, the relayable signal including the information about the number of relays after the reduction is stored in the memory management unit 104 of Fig. 6 and the relayable signal is transmitted to another portable terminal (the portable terminal 12 herein). The portable terminal then activates a storage time timer that makes a time-out after a lapse of the storage time determined in S29, and terminates the processing of Fig. 9.

During execution of the above processing of Fig. 9, an interrupt operation of Fig. 10 is handled at every predetermined time. It is first checked whether an acknowledgment signal (equivalent to T7 in Fig. 7) is received from another portable terminal to which the relayable signal was transmitted (the portable terminal 12 herein) (S41 in Fig. 10). When the acknowledgment signal is received, it can be determined that the relaying operation is complete, and thus the portable terminal stops the storage time timer (S42), discards the relayable signal stored (S44), and terminates the processing of Fig. 10.

When no acknowledgment signal is received in S41, the portable terminal checks whether the predetermined storage time has elapsed, i.e., whether the storage time timer has made a time-out (S43). When the storage time timer has already made a time-out, it can be determined that it is no longer necessary to store the relayable signal, and thus the portable terminal discards the relayable signal stored (S44), and terminates the processing of Fig. 10.

When the storage time timer does not make a time-out yet in S43, the relayable signal is retransmitted to another portable terminal (the portable terminal 12 herein) (S45), and the processing of Fig. 10 is terminated.

The above processing of Figs. 9 and 10 permits the reachability of the signal to be adjusted by changing the storage time according to levels of urgency or importance of the signal. Namely, the relay control of the signal can be executed in consideration of the level of urgency or importance of the message to the portable terminal.

The base station 21 can also transmit the information about the level of urgency or importance of the relayable signal, instead of the information about the storage time of the relayable signal. A portable terminal receiving the information about the level of urgency or importance, determines a time to store the relayable signal, based on the information about the level of urgency or importance, and stores the relayable signal. Then the portable terminal repeatedly transmits the relayable signal thus stored. On the occasion of the transmission, the portable terminal also transmits the information about the level of urgency or importance.

### Industrial Applicability

As described above, the present invention enables a signal to a portable terminal of a destination to be relayed by another portable terminal so as to reach the destination portable terminal.

This permits a user to make an appointment of meeting or an emergency contact with another user staying in an underground shopping area or a secluded place, or in a non-service area such as a mountain area, without any additional infrastructure (facilities of communication infrastructure) of base stations and others. Since a local network constructed by short-range wireless among a plurality of portable terminals present in ambient surroundings is an unstable network dynamically constructed including a portable terminal of a moving user itself, there is no guarantee that a message or the like always reaches the user. However, in the case where the level of importance or urgency is high, for example, the reachability can be enhanced by increasing the propagation range and the existence time of the message. Namely, the message or the like can be propagated in a wide range while moving around among the portable terminals.

## Claims

1. A portable terminal comprising:
receiving means for receiving a signal to another portable terminal; and
transmitting means for transmitting the signal to the other portable terminal.

2. A portable terminal comprising:
receiving means for receiving information about the number of relays of a signal to another portable terminal; and
transmitting means for determining whether the signal to the other portable terminal is to be transmitted, based on the information about the number of relays of the signal to the other portable terminal, and controlling transmission of the signal, based on a result of the determination.

3. The portable terminal according to Claim 2, wherein said receiving means receives information about a level of urgency or importance of the signal to the other portable terminal, and
wherein said transmitting means determines whether the signal to the other portable terminal is to be transmitted, based on the information about the number of relays of the signal to the other portable terminal and on the information about the level of urgency or importance.

4. The portable terminal according to Claim 2 or 3, further comprising storing means for storing the signal to the other portable terminal,
wherein said receiving means receives information about a storage time of the signal to the other portable terminal,
wherein said storing means determines a time to store the signal to the other portable terminal, based on the information about the storage time of the signal to the other portable terminal, and
wherein said transmitting means repeatedly transmits the signal to the other portable terminal stored.

5. The portable terminal according to Claim 2 or 3, further comprising storing means for storing the signal to the other portable terminal,
wherein said receiving means receives information about a level of urgency or importance of the signal to the other portable terminal,
wherein said storing means determines a time to store the signal to the other portable terminal, based on the information about the level of urgency or importance of the signal to the other portable terminal, and
wherein said transmitting means repeatedly transmits the signal to the other portable terminal stored.

6. The portable terminal according to one of Claims 2-5, wherein said receiving means and/or said transmitting means performs short-range wireless communication.

7. The portable terminal according to Claim 6, wherein said short-range wireless communication is communication based on Bluetooth.

8. The portable terminal according to one of Claims 2-7, further comprising:
reply signal receiving means for receiving a reply signal transmitted by the other portable terminal; and
reply signal transmitting means for transmitting the reply signal transmitted by the other portable terminal.

9. A control station used in a system having at least one service area and configured to provide a radio communication service to a portable terminal, the control station comprising:
receiving means for receiving a transmission request to a portable terminal; and
determining means for determining at least one service area for transmission of a relayable signal that can be transmitted to a portable terminal as a target for said transmission request via a portable terminal other than said target portable terminal.

10. A control station used in a system having at least one service area and configured to provide a radio communication service to a portable terminal, the control station comprising:
receiving means for receiving a transmission request to a portable terminal; and
determining means for determining at least one service area for transmission of a relayable signal that can be transmitted to a portable terminal as a target for said transmission request via a portable terminal other than said portable terminal, based on information about the portable terminal as a target for the transmission request.

11. The control station according to Claim 10, wherein the service area determined by said determining means includes at least one of a service area preliminarily registered for the portable terminal as a target for the transmission request, a service area where the portable terminal as a target for the transmission request performed location registration last, and a service area where the portable terminal as a target for the transmission request frequently performed location registration.

12. The control station according to Claim 10 or 11, wherein said determining means determines the service area for transmission of the relayable signal, based on information independent of the portable terminal as a target for the transmission request.

13. The control station according to Claim 12, wherein the service area determined by said determining means includes a service area where the portable terminal frequently fails to perform communication in a home area thereof.

14. The control station according to one of Claims 10-13, wherein said receiving means receives information about the transmission request, and
wherein said determining means adjusts the number of service areas for transmission of the relayable signal, based on the information about the transmission request, and determines the service area or areas.

15. The control station according to Claim 14, wherein the information about the transmission request is information about a level of urgency or importance of the transmission request.

16. A communication method in a portable terminal, comprising:
a receiving step of receiving a signal to another portable terminal; and
a transmitting step of transmitting the signal to the other portable terminal.

17. A communication method in a portable terminal, comprising:
a receiving step of receiving information about the number of relays of a signal to another portable terminal;
a determining step of determining whether the signal to the other portable terminal is to be transmitted, based on the information about the number of relays of the signal to the other portable terminal; and
a transmission control step of controlling transmission of the signal, based on a result of the determination.

18. A control method used in a system having at least one service area and configured to provide a radio communication service to a portable terminal, the control method comprising:
a receiving step of receiving a transmission request to a portable terminal; and
a determining step of determining at least one service area for transmission of a relayable signal that can be transmitted to a portable terminal as a target for the transmission request via a portable terminal other than said target portable terminal.

19. A control method used in a system having at least one service area and configured to provide a radio communication service to a portable terminal, the control method comprising:
a receiving step of receiving a transmission request to a portable terminal; and
a determining step of determining at least one service area for transmission of a relayable signal that can be transmitted to a portable terminal as a target for the transmission request via a portable terminal other than said portable terminal, based on information about the portable terminal as a target for the transmission request.

20. A communication program for letting a computer, which is mounted on a portable terminal, execute the following steps:
a receiving step of receiving information about the number of relays of a signal to another portable terminal;
a determining step of determining whether the signal to the other portable terminal is to be transmitted, based on the information about the number of relays of the signal to the other portable terminal; and
a transmission control step of controlling transmission of the signal, based on a result of the determination.

21. A control program for letting a computer, which is mounted on a control station used in a system having at least one service area and configured to provide a radio communication service to a portable terminal, execute the following steps:
a receiving step of receiving a transmission request to a portable terminal; and
a determining step of determining at least one service area for transmission of a relayable signal that can be transmitted to a portable terminal as a target for the transmission request via a portable terminal other than said target portable terminal, based on information about the portable terminal as a target for the transmission request.
